# FASCICULE DE BREVET EUROPEEN

(11) **EP 3 115 225 B1**
(45) Date de publication et mention de la délivrance du brevet: **18.12.2019**
(21) Numéro de dépôt: 16020255.2
(22) Date de dépôt: 29.06.2016
(51) Int. Cl.: B60B 7/00, B60B 27/00

(54) **MOYEU DE ROUE, ROULEMENT DE ROUE, ET ASSEMBLAGE DE ROUE DE VEHICULE**
RADNABE, RADLAGER UND RADANORDUNG EINES FAHRZEUGRADS
WHEEL HUB, WHEEL BEARING, AND VEHICLE WHEEL ASSEMBLY

(30) Priorité: 06.07.2015 FR 1556403
(43) Date de publication de la demande: 11.01.2017
(73) Titulaire: NTN-SNR Roulements, 76000 Annecy (FR)
(72) Inventeur: Ehinger, Pierre, 74210 Faverges (FR); Motot, Jean-Noel, 74600 Seynod (FR); Torelli, Nadège, 74540 Cusy (FR)
(74) Mandataire: Broydé, Marc

(56) Documents cités:
- EP-A1- 0 568 958
- WO-A1-2012/122967
- FR-A1- 2 495 548
- FR-A1- 2 514 301
- FR-A1- 2 687 614

## Description

### DOMAINE TECHNIQUE DE L'INVENTION

L'invention se rapporte au centrage d'un disque de frein et/ou d'une jante sur un moyeu roulement de roue de véhicule.

### ÉTAT DE LA TECHNIQUE ANTÉRIEURE

Dans le document JP7-317777 est décrit un moyeu de roue composé d'une bague extérieure de roulement de roue dans laquelle sont formé des chemins de roulement, et d'une douille soudée à la bague extérieure, faisant saillie axialement par rapport à un flasque de la bague extérieure dans une direction opposée au chemins de roulement. Après soudage, diverses opérations de finition de la douille et de la bague sont effectuées. La douille est une pièce de centrage qui a vocation à permettre le centrage d'un disque de frein et/ou d'une jante sur le moyeu de roue. Dans la mesure où les opérations de finition de la douille on lieu après le soudage de la douille sur la bague extérieure, il est possible de rectifier les surfaces de centrage autant que nécessaire, si des déformations se sont produites lors du soudage.

Dans le document DE 10 2006 029 604 est proposée un montage analogue d'un moyeu de roue, dans lequel une douille de centrage peut être emmanchée, le cas échéant en force, et de préférence avec une liaison de matière par brasage, soudage ou collage à une extrémité d'une bague extérieure de roulement de roue. Aucune opération de finition des surfaces de la douille postérieurement à son emmanchement dans la bague extérieure n'est décrite. Dans l'hypothèse où l'on souhaite solidariser la douille à la bague uniquement par frettage, sans brasage, soudage ou collage, les contraintes dans le corps de la douille peuvent induire des déformations dans la zone fonctionnelle de la douille dédiée au centrage du disque de frein ou de la jante. Si l'on tente d'utiliser cette technologie pour monter un disque de frein ou une jante avec un jeu de centrage très faible, on fait face à de nombreux défauts sur la chaîne d'assemblage du véhicule. Un tel montage impose donc des tolérances relativement importantes lors du montage du disque de frein et de la jante sur la douille. Par ailleurs, la douille de centrage ne permet pas de protéger le roulement. Un assemblage similaire est proposé dans le document WO14012777, qui présente les mêmes inconvénients. Un autre assemblage est décrit par document EP 0 568 958 A1, qui montre en outre des éléments d'étanchéité entre l'élément de centrage et le roulement de roue.

Par ailleurs, il est connude fermer l'extrémité axiale d'un roulement de roue avec un couvercle, monté sur la bague extérieure du roulement de roue avec interposition d'un joint torique. Un tel couvercle n'a toutefois pas de fonction de centrage lors du montage du disque de frein ou de la jante de roue.

### EXPOSÉ DE L'INVENTION

L'invention vise à remédier à certains au moins des inconvénients de l'état de la technique et à simplifier le montage d'une roue de véhicule.

Pour ce faire est proposé, selon un premier aspect de l'invention, un moyeu de roue comportant:
- une bague extérieure monobloc de roulement présentant au moins un chemin de roulement extérieur tourné radialement vers l'intérieur et définissant un axe de référence du moyeu de roue et une cavité tubulaire, et un flasque pourvu de trous de fixation d'une jante de roue; et
- une pièce de centrage solidaire de la bague extérieure et comportant au moins une zone de montage (48, 148) insérée dans la bague extérieure, une première zone de centrage faisant saillie axialement vers l'extérieur par rapport à la bague extérieure et comportant une première portée de centrage cylindrique tournée radialement vers l'extérieur, et une paroi de fond pleine fermant une extrémité axiale de la cavité.

La pièce de centrage réalise alors une triple fonction: lors de l'assemblage de la roue, elle assure le centrage de jante et/ou du disque de frein sur la bague extérieure; après l'assemblage, elle assure la fermeture de l'extrémité axiale de la bague extérieure de roulement et sa protection contre les pollutions. A ces deux fonctions s'en ajoute une troisième, qui précède le montage de la pièce de centrage sur la bague extérieure: en constituant le moyeu de roue en deux pièces, il est en effet possible d'accéder librement au volume intérieur de la bague extérieure avant le montage de la pièce de centrage, ce qui permet notamment d'intervenir sur l'arbre fixe sur lequel est monté le moyeu, notamment pour effectuer un serrage des bague intérieure de roulement qui viennent compléter la bague extérieure. La paroi de fond, outre sa fonction de couvercle, confère à la pièce de centrage sa rigidité, ce qui permet de limiter les déformations induites au niveau de la première portée de centrage par la solidarisation de la pièce de centrage à la bague extérieure.

De préférence la paroi de fond est discoïdale.

Suivant un mode de réalisation la première portée de centrage est située axialement entre le flasque et la paroi de fond, ou en recouvrement axial avec la paroi de fond. En décalant la paroi de fond par rapport à la portée de centrage, on permet la définition au niveau de la pièce de centrage d'une zone de transition située entre la portée de centrage et le flasque de la bague extérieure de roulement, qui limite la transmission de contraintes dans la première zone de centrage.

Suivant un mode de réalisation la pièce de centrage est ajustée sans serrage dans la bague extérieure. De préférence, un joint d'étanchéité annulaire est disposé entre la pièce de centrage et la bague extérieure.

Suivant un mode de réalisation la pièce de centrage est solidarisée à la bague extérieure par brasage, soudage ou collage.

Suivant un mode de réalisation alternatif du précédent, la pièce de centrage est frettée dans la bague extérieure, de préférence sans brasage, soudage ou collage. De préférence la zone de montage comporte une portée cylindrique de frettage tournée radialement vers l'extérieur frettée à l'intérieur de la bague extérieure. La zone de montage peut alors être qualifiée de zone de frettage.

Suivant un mode de réalisation particulièrement avantageux, la pièce de centrage a une surface extérieure tournée radialement vers l'extérieur de la cavité et incluant la première portée de centrage, et une surface intérieure tournée radialement vers l'intérieur de la cavité, la pièce de centrage comportant en outre une zone annulaire de transition s'étendant de la zone annulaire de montage à la première zone de centrage, la pièce de centrage ayant une épaisseur radiale, mesurée entre la surface extérieure et la surface intérieure, qui varie le long de l'axe de référence, en passant par une valeur minimale au niveau de la zone annulaire de transition, la valeur minimale étant inférieure à la moitié de l'épaisseur radiale mesurée au niveau de la zone annulaire de montage. L'épaisseur réduite de la zone annulaire de transition permet de découpler la première zone de centrage de la zone de frettage, de sorte que les contraintes dans la zone de frettage n'induisent que peu de déformations dans la première zone de centrage. De préférence la valeur minimale est inférieure à la moitié de l'épaisseur radiale mesurée au niveau de la première zone de centrage.

De préférence la zone annulaire de transition a une longueur, mesurée parallèlement à l'axe de référence, supérieure à la valeur minimale, et de préférence supérieure à deux fois la valeur minimale. La répercussion des contraintes de frettage diminue en effet lorsque la distance augmente.

Suivant un mode de réalisation qui s'avère particulièrement efficace en pratique, la face extérieure de la zone annulaire de transition forme une gorge annulaire extérieure de rétrécissement.

De préférence, la pièce de centrage comporte en outre une deuxième zone de centrage comportant une deuxième portée de centrage tournée radialement vers l'extérieur, la première zone de centrage étant située axialement entre la zone annulaire de transition et la deuxième zone de centrage. La première zone de centrage peut alors être dédiée au centrage du disque de frein et la deuxième zone de centrage au centrage de la jante. Suivant un mode de réalisation la deuxième portée de centrage est située axialement entre la paroi de fond et la première portée de centrage. Alternativement la paroi de fond est située axialement entre la première portée de centrage et la deuxième portée de centrage.

On peut également prévoir que la surface extérieure de la pièce forme un relief de démontage, pour faciliter le démontage de la pièce de centrage. Ce relief de démontage peut être saillant ou en creux, ponctuel ou sur l'ensemble de la périphérie de la pièce de centrage. Il peut notamment s'agir d'un bourrelet annulaire ou d'une gorge annulaire, qui peut par exemple est située entre la portée de centrage et la zone de montage.

Suivant un autre aspect de l'invention, celle-ci a trait à un roulement de roue comportant au moins un moyeu de roue selon le premier aspect de l'invention, une ou plusieurs bagues intérieure sur lesquelles sont formés un ou plusieurs chemins de roulement, des corps roulants pour rouler sur le ou les chemins de roulements formés sur la bague extérieure et sur le ou les chemins de roulement formés sur la ou les bagues intérieures.

Suivant un autre aspect de l'invention, celle-ci a trait à Assemblage de roue de véhicule, comportant un roulement de roue selon l'aspect précédent de l'invention, et un disque de frein centré sur la première portée de centrage. De préférence l'assemblage de roue comporte en outre une jante de roue centrée sur la deuxième portée de centrage.

Suivant un autre aspect de l'invention pouvant se combiner avec les précédents, celle-ci a trait à un moyeu de roue comportant: une bague extérieure monobloc de roulement présentant au moins un chemin de roulement extérieur tourné radialement vers l'intérieur et définissant un axe de référence du moyeu de roue, et un flasque pourvu de trous de fixation d'une jante de roue, la bague extérieure délimitant radialement une cavité tubulaire ; une pièce de centrage comportant au moins une première zone de centrage faisant saillie axialement vers l'extérieur par rapport à la bague extérieure, et comportant une première portée de centrage cylindrique tournée radialement vers l'extérieur, la pièce de centrage ayant une surface extérieure tournée radialement vers l'extérieur de la cavité et incluant la première portée de centrage, et une surface intérieure tournée radialement vers l'intérieur de la cavité, la pièce de centrage étant montée ajustée sans serrage dans un embrèvement de la bague extérieure, un joint d'étanchéité annulaire étant disposé entre la pièce de centrage et la bague extérieure.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'un ensemble de roue de véhicule selon un premier mode de réalisation de l'invention;
- la figure 2, un détail d'une pièce de centrage de l'ensemble de roue de la figure 1;
- la figure 3, une vue en coupe d'un moyeu de roue selon un deuxième mode de réalisation de l'invention;
- la figure 4, un détail d'un ensemble de roue de véhicule selon un troisième mode de réalisation de l'invention;
- la figure 5, une vue en coupe d'un ensemble de roue de véhicule selon un quatrième mode de réalisation de l'invention;
- la figure 6, un détail d'un moyeu de l'ensemble de roue de la figure 5;
- la figure 7 une vue partielle en coupe d'une pièce de centrage d'un ensemble de roue de véhicule selon un cinquième mode de réalisation.

Pour plus de clarté, les éléments identiques ou similaires sont repérés par des signes de référence identiques sur l'ensemble des figures.

### DESCRIPTION DÉTAILLÉE DE MODES DE RÉALISATION

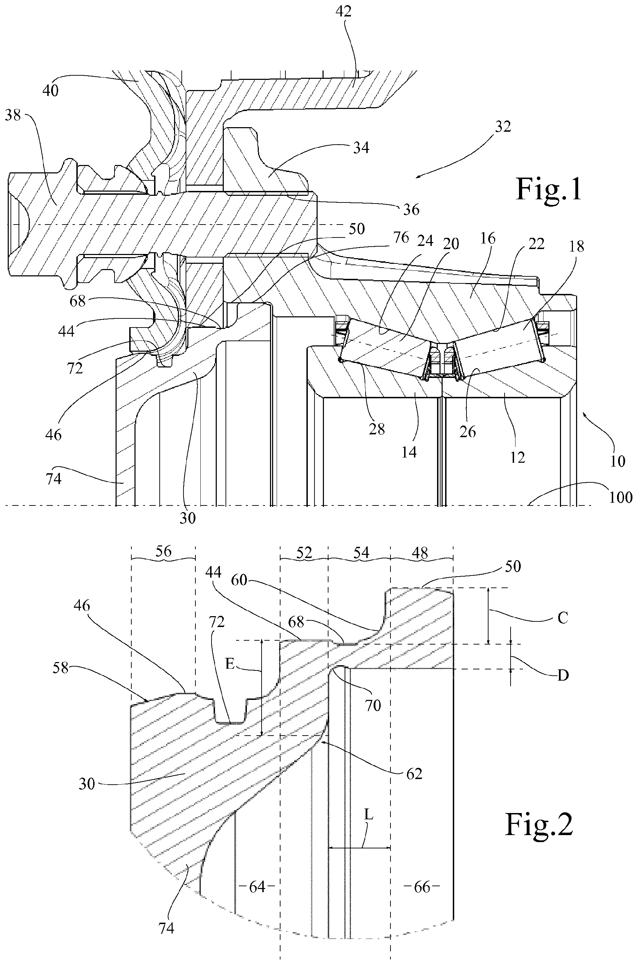

Sur la figure **1** est illustré un roulement **10** de roue non motrice de véhicule, composé de deux bagues intérieures **12**, **14** destinées à être montée sur un arbre (non représenté), d'une bague extérieure **16** monobloc et de deux rangées de corps roulants **18**, **20** disposés entre des chemins de roulement extérieurs **22**, **24** formés sur la bague extérieure **16** et des chemins de roulement intérieurs **26**, **28** formés sur les deux bagues intérieures **12**, **14.** La bague extérieure **16** est solidaire d'une pièce de centrage **30** et forme avec cette dernière un moyeu de roue **32.** A cet effet, la bague extérieure **16** forme un flasque **34** comportant un ou plusieurs trous **36**, filetés ou non, pour le passage de tiges de fixation **38** d'une jante **40** de la roue et d'un disque de frein **42**, alors que la pièce de centrage **30** matérialise une première portée de centrage **44** cylindrique pour le disque de frein **42** et une deuxième portée de centrage **46** cylindrique pour la jante **40.** Les chemins de roulements extérieurs **22**, **24** de la bague extérieure **16** définissent un axe de référence **100** du roulement **10**, qui est également un axe de révolution du moyeu **32** et de la roue. La pièce de centrage **30** est frettée dans la bague extérieure **16** et fait saillie axialement vers l'extérieur par rapport à la bague extérieure **16**, dans une direction axiale opposée aux chemins de roulement extérieurs **22**, **24.**

Comme illustré en détails sur la figure **2**, la pièce de centrage **30**, qui est de préférence métallique et présente de préférence une symétrie de révolution autour de l'axe de référence **100**, comporte une zone annulaire de frettage **48** comportant une portée cylindrique de frettage **50** tournée radialement vers l'extérieur, au moins une première zone de centrage **52** comportant la première portée de centrage **44** cylindrique tournée radialement vers l'extérieur, et une zone annulaire de transition **54** située axialement entre la zone annulaire de frettage **48** et la première zone de centrage **52** et s'étendant de la zone annulaire de frettage **48** à la première zone de centrage **52**, et une deuxième zone de centrage **56** comportant la deuxième portée de centrage **46** tournée radialement vers l'extérieur, la première zone de centrage **52** étant située axialement entre la zone annulaire de transition **54** et la deuxième zone de centrage **56.**

La pièce de centrage **30** présente une surface extérieure **58** tournée radialement vers l'extérieur incluant la portée cylindrique de frettage **50**, la première portée de centrage **44**, une face extérieure **60** de la zone annulaire de transition **54**, et la deuxième portée de centrage **46.** La pièce de centrage **30** présente également une surface intérieure **62** tournée radialement vers l'intérieur et délimitant une cavité **64** à l'intérieur de la surface extérieure **58,** prolongeant une cavité tubulaire **66** délimitée par la bague extérieure **16** et dans laquelle sont logées les bagues intérieures **12**, **14.**

Comme illustré sur la figure **2**, la pièce de centrage **30** a une épaisseur radiale, mesurée entre la surface extérieure **58** et la surface intérieure **62**, qui varie le long de l'axe de référence **100**, et qui passe par une valeur minimale D au niveau de la zone annulaire de transition **54.** Cette valeur minimale D est inférieure à la moitié de l'épaisseur radiale C mesurée au niveau de la zone annulaire de frettage **48** et à la moitié de l'épaisseur radiale E mesurée au niveau de la première zone de centrage **52.** La zone annulaire de transition **54** a une longueur L, mesurée parallèlement à l'axe de référence, supérieure à deux fois la valeur minimale D. La face extérieure **60** de la zone annulaire de transition **54** forme une gorge annulaire **68** extérieure de rétrécissement. La surface intérieure **62** de la pièce de centrage **30** forme une gorge annulaire **70** intérieure de rétrécissement au niveau de la zone annulaire de transition **54.** La valeur minimale D se mesure dans un plan coupant la gorge annulaire intérieure **70** et la gorge annulaire extérieure **68.**

Dans le mode de réalisation illustré sur les figures 1 et 2, la première portée de centrage **44** a un diamètre inférieur à la portée cylindrique de frettage **50.** La deuxième portée de centrage **46** a quant à elle un diamètre inférieur à la première portée de centrage **44.** La surface extérieure **58** de la pièce de centrage **30** forme une gorge annulaire de démontage **72** dans une zone intermédiaire entre la première portée de centrage **44** et la deuxième portée de centrage **46.**

La pièce de centrage **30** comporte une paroi de fond **74** pleine qui vient fermer la cavité **66** délimitée par la bague extérieure **16** et la pièce de centrage **30.**

La pièce de centrage **30** est solidarisée à la bague extérieure **16** par frettage, à chaud ou à froid, de la portée cylindrique de frettage **50** dans un embrèvement **76** de la bague extérieure **16**, sans brasage, soudage ou collage et plus généralement sans autres opérations de solidarisation mécanique. En pratique, cette opération de frettage peut être pratiquée avant ou, de préférence, après montage de la bague intérieure **12**, **14** sur l'arbre destiné à la recevoir, ce qui permet notamment d'accéder à l'extrémité de l'arbre par l'ouverture d'accès existant avant la mise en place de la pièce de centrage **30.** Après frettage de la pièce de centrage **30**, on peut monter le disque de frein **42** et la jante **40** de roue, et les fixer grâce aux tiges de fixation **38.** Le disque de frein **42** est de préférence en appui contre le flasque **34** et sans contact axial avec pièce de centrage **30**, tout en formant un arrêt qui empêche toute migration de la pièce de centrage **30.** La jante **40** est de préférence en appui contre le disque de frein **42** dans cette zone de fixation. Dans l'hypothèse où la paroi de fond **74** pleine est présente, la pièce de centrage **30** a une double fonction de centrage et de bouchon.

Dans une exemple de réalisation, on a constaté avec une épaisseur d'environ 8 mm dans la zone de frettage, de 3mm dans la zone de transition de 10 mm dans la première zone de centrage, qu'il est possible de garantir une tolérance de ± 15µm au niveau de la première portée de centrage **44**.

La gorge annulaire de démontage **72** permet le démontage de la pièce de centrage **30** à l'aide d'un outil.

Comme illustré sur la figure **1**, la pièce de centrage **30** est radialement en recouvrement avec la ou les bagues intérieures **12**, **14.** La portée cylindrique de frettage **50** et l'embrèvement **76** sont situés radialement à l'extérieur du ou des chemins de roulement **22**, **24** formés sur la bague extérieure **16**, pour permettre l'usinage des chemins de roulement **22**, **24.**

Naturellement, l'exemple représenté sur les figures et discuté ci-dessus n'est donné qu'à titre illustratif et non limitatif. La pièce de centrage **30** illustrée sur les figures est de préférence forgée usinée. Mais on peut également envisager qu'une partie de la pièce, par exemple la totalité de la surface extérieure **58** incluant la portée de frettage **50** et les portées de centrage **44**, **46**, soit métallique et qu'une autre, par exemple la paroi de fond **74** et/ou une portion intérieure des zones de frettage **48** et de centrage **52**, **56**, soit en matériau plastique. On peut également envisager que la zone annulaire de transition **54** constitue une zone en matière plastique formant une zone de discontinuité entre une zone de frettage **48** dont au moins la portée de frettage **50** est constituée en métal et la première zone de centrage **52** dont au moins la portée de centrage **44** est constituée en métal. De façon analogue, on peut envisager que la pièce de centrage **30** soit entièrement métallique, mais avec plusieurs nuances métalliques différentes, l'une plus particulièrement dédiée par exemple à la zone de frettage **48** et une autre aux zones de centrage **52**, **56**, ou bien, par exemple une nuance dédiée à la portée de frettage **50** et aux portées de centrage **44**, **46**, et une autre au corps de la pièce de centrage **30.** Les corps roulants **18**, **20** peuvent être des rouleaux coniques, des billes ou tout type de rouleaux approprié. Le roulement **10** peut ne comporter qu'une bague intérieure **12**, **14**, l'un des deux chemins de roulement intérieurs **26**, **28** étant formé directement sur l'arbre portant la bague intérieure **12**, **14.** Le mode de fixation du disque de frein **42** et de la jante **40** de roue peut être de tout type. La deuxième portée de centrage **46** peut avoir un diamètre inférieur ou égal à la première portée de centrage **44.** La gorge annulaire de démontage **72** peut être remplacée par un relief de démontage de type quelconque, donnant une prise pour un outil de démontage. La paroi de fond **74** pleine peut être omise, auquel cas la pièce de centrage **30** forme une douille.

En pratique, le frettage de la pièce de centrage **30** sera effectué après le montage des bagues intérieure **12, 14** sur l'arbre fixe, toutes les fois où la présence de la pièce de centrage **30** rendrait impossible l'insertion d'un outil de serrage de la pièce, vis ou écrou, servant à arrêter la translation des bagues intérieure **12**, **14.** Ceci sera le cas notamment lorsqu'au moins une partie de la pièce de centrage **30**, notamment la paroi de fond **74** lorsque celle-ci est présente, se trouve à une distance de l'axe de référence **100** inférieure à la distance entre l'axe de référence **100** et l'une au moins des bagues intérieure **12**, **14.**

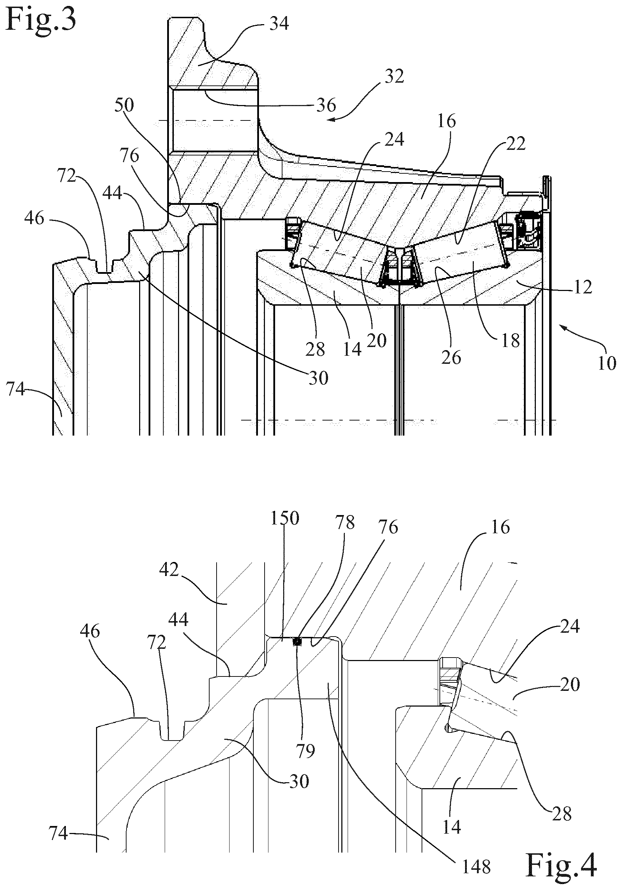

Sur la figure 3 est illustrée une variante qui diffère de celle des figures 1 et 2 essentiellement par l'absence de la gorge annulaire **68** extérieure de rétrécissement et de la gorge annulaire **70** intérieure de rétrécissement au niveau de la zone annulaire de transition **54** de sorte que le rétrécissement de l'épaisseur radiale est moins sensible à ce niveau.

Sur la figure 4 est illustrée une autre variante qui diffère des modes de réalisation précédents par le mode de fixation de la pièce de centrage **30** à la bague extérieure **16** du roulement de roue, qui n'est pas un frettage, mais un montage ajusté sans serrage dans l'embrèvement **76** d'une portée de montage **150** formée dans une zone de montage **148** de la pièce de centrage **30**, avec interposition d'un joint torique **78.** qui vient se loger dans une gorge annulaire **79** de la portée de montage **150.**

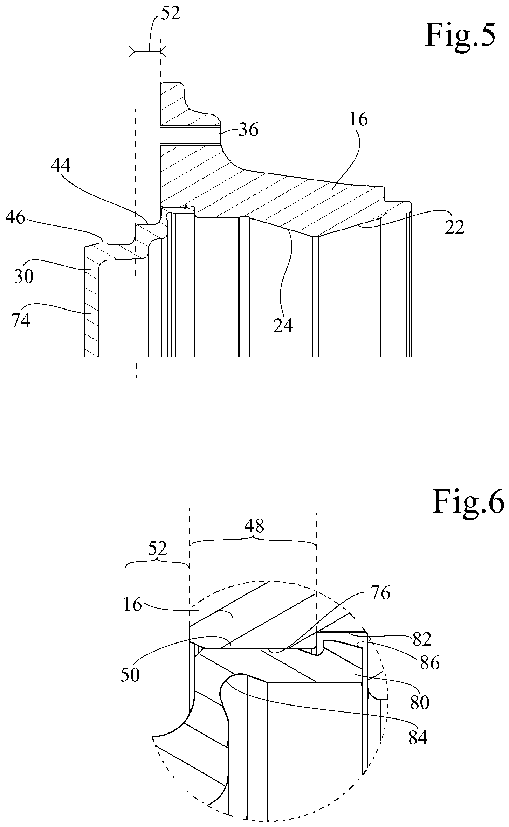

Sur les figures 5 et 6 est illustrée une autre variante qui diffère des modes de réalisation précédents par le mode de fixation de la pièce de centrage **30** à la bague extérieure **16** du roulement de roue. La pièce de centrage est frettée avec une très faible interférence dans un embrèvement **76** de la bague extérieure. Cette très faible interférence évite tout risque de déformation de la première zone de centrage **52**, même sans zone de transition, mais nécessite une sécurisation. A cet effet, la pièce de centrage est pourvue d'un ergot annulaire **80** qui vient se loger dans une gorge annulaire de logement **82** prévue à l'extrémité de l'embrèvement **76.** La zone de frettage **48** comporte une partie amincie **84** pour permettre une flexion de l'ergot **80** lors de l'insertion de la pièce de centrage **30** dans l'embrèvement **76** de la bague extérieure **16.** L'ergot **80** comporte en outre un chanfrein de guidage **86**, pour faciliter son introduction dans l'embrèvement **76.** La longueur axiale de la portée de frettage **50** est choisie de telle manière que lorsque l'ergot **80** est en butée contre la paroi de la gorge de logement **82** jouxtant l'embrèvement **76**, le disque de frein **42** ne soit pas en appui axial contre la pièce de centrage **30** au niveau de la zone de frettage **48.**

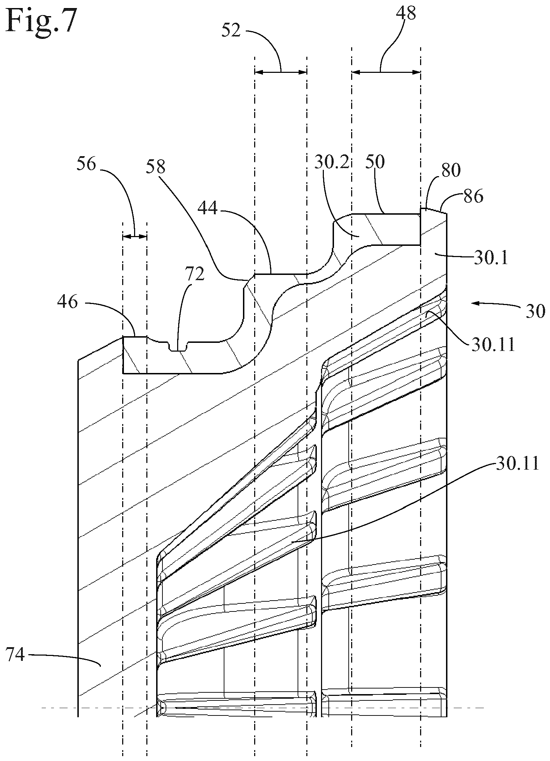

Sur la figure 7 est illustrée une autre variante dérivée de celle des figures 5 et 6, qui reprend le mode de fixation combinant un frettage de la pièce de centrage **30** avec une très faible interférence dans un embrèvement de la bague extérieure (non représentée) et une sécurisation à l'aide d'un ergot **80.** La pièce de centrage **30** se distingue toutefois de la précédente par sa constitution en deux matières, par surmoulage d'un noyau creux **30.1** en matière plastique sur un insert métallique extérieur superficiel **30.2**, le noyau en matière plastique **30.1** constituant la paroi de fond **74**, une portion intérieure des zones de frettage **48** et de centrage **52**, **56,** et l'ergot **80**, et l'insert métallique superficiel **30.2** formant une partie de la surface extérieure **58** incluant la portée de frettage **50** et les portées de centrage **44**, **46.** Le noyau creux en matière plastique **30.1** est de préférence pourvu de nervures **30.11** pour lui conférer la rigidité souhaitée, en minimisant la quantité de matière.

Naturellement d'autres variantes sont également envisageables. Il est par exemple possible de prévoir des ergots individuels non annulaires, répartis sur la circonférence de la pièce de centrage.

Il est également explicitement prévu que l'on puisse combiner entre eux les différents modes de réalisation.

## Revendications

1. Moyeu de roue (32) comportant:
- une bague extérieure (16) monobloc de roulement présentant au moins un chemin de roulement extérieur tourné radialement vers l'intérieur et définissant un axe de référence du moyeu de roue (32) et une cavité tubulaire (66), et un flasque (34) pourvu de trous (36) de fixation d'une jante (40) de roue; et
- une pièce de centrage (30) solidaire de la bague extérieure (16) et comportant au moins une zone de montage (48, 148) insérée dans la bague extérieure (16), et une première zone de centrage (52) faisant saillie axialement vers l'extérieur par rapport à la bague extérieure (16), et comportant une première portée de centrage (44) cylindrique tournée radialement vers l'extérieur,
**caractérisé en ce que** la pièce de centrage (30) comporte une paroi de fond (74) pleine fermant une extrémité axiale de la cavité (66).

2. Moyeu de roue (32) selon la revendication 1, **caractérisé en ce que** la paroi de fond (74) est discoïdale.

3. Moyeu de roue (32) selon l'une quelconque des revendications précédentes, **caractérisé en ce que** la pièce de centrage (30) est frettée dans la bague extérieure (16), de préférence sans brasage, soudage ou collage.

4. Moyeu de roue (32) selon la revendication 3, **caractérisé en ce que** la zone de montage (48) comporte une portée cylindrique de frettage (50) tournée radialement vers l'extérieur frettée à l'intérieur de la bague extérieure (16),

5. Moyeu de roue (32) selon l'une quelconque des revendications précédentes, **caractérisé en ce que** la pièce de centrage (30) a une surface extérieure (58) tournée radialement vers l'extérieur de la cavité (66) et incluant la première portée de centrage (44), et une surface intérieure (62) tournée radialement vers l'intérieur de la cavité (66), la pièce de centrage (30) comportant en outre une zone annulaire de transition (54) s'étendant de la zone annulaire de montage (48) à la première zone de centrage (52), la pièce de centrage (30) ayant une épaisseur radiale, mesurée entre la surface extérieure (58) et la surface intérieure (62), qui varie le long de l'axe de référence, en passant par une valeur minimale au niveau de la zone annulaire de transition (54), la valeur minimale étant inférieure à la moitié de l'épaisseur radiale mesurée au niveau de la zone annulaire de montage (48).

6. Moyeu de roue (32) selon la revendication 5, **caractérisé en ce que** la valeur minimale est inférieure à la moitié de l'épaisseur radiale mesurée au niveau de la première zone de centrage (52).

7. Moyeu de roue (32) selon la revendication 5 ou la revendication 6, **caractérisé en ce que** la zone annulaire de transition (54) a une longueur, mesurée parallèlement à l'axe de référence, supérieure à la valeur minimale, et de préférence supérieure à deux fois la valeur minimale.

8. Moyeu de roue (32) selon l'une quelconque des revendications 5 à 7, **caractérisé en ce que** la face extérieure (60) de la zone annulaire de transition (54) forme une gorge annulaire extérieure de rétrécissement.

9. Moyeu de roue (32) selon l'une quelconque des revendications 5 à 8, **caractérisé en ce que** la pièce de centrage (30) comporte en outre une deuxième zone de centrage (56) comportant une deuxième portée de centrage (46) tournée radialement vers l'extérieur, la première zone de centrage (52) étant située axialement entre la zone annulaire de transition (54) et la deuxième zone de centrage (56).

10. Moyeu de roue (32) selon la revendication 9, **caractérisé en ce que** la deuxième portée de centrage (46) est située axialement entre la paroi de fond (74) et la première portée de centrage (44).

11. Moyeu de roue (32) selon la revendication 9, **caractérisé en ce que** la paroi de fond (74) est située axialement entre la première portée de centrage (44) et la deuxième portée de centrage (46).

12. Moyeu de roue (32) selon l'une quelconque des revendications 1 à 11, **caractérisé en ce que** la surface extérieure (58) de la pièce forme un relief de démontage (72).

13. Roulement de roue comportant au moins un moyeu de roue (32) selon l'une quelconque des revendications précédentes, une ou plusieurs bagues intérieure sur lesquelles sont formés un ou plusieurs chemins de roulement, des corps roulants (18, 20) pour rouler sur le ou les chemins de roulements formés sur la bague extérieure (16) et sur le ou les chemins de roulement formés sur la ou les bagues intérieures (12, 14).

14. Assemblage de roue de véhicule, comportant un roulement (10) de roue selon la revendication 13, et un disque de frein (42) centré sur la première portée de centrage (44).

15. Assemblage de roue de véhicule selon la revendication précédente, **caractérisé en ce que** le moyeu est au moins selon l'une quelconque des revendications 9 à 11 et **en ce que** l'assemblage de roue comporte en outre une jante (40) de roue centrée sur la deuxième portée de centrage (46).

## Patentansprüche

1. Radnabe (32), die Folgendes umfasst:
- einen einteiligen äußeren Laufring (16) mit mindestens einer radial nach innen gerichteten äußeren Rollbahn, die eine Bezugsachse der Radnabe (32) und einen röhrenförmigen Hohlraum (66) abgrenzt, und einen Flansch (34), der mit Löchern (36) zur Befestigung einer Radfelge (40) versehen ist; und
- ein Zentrierteil (30), das fest mit dem Außenring (16) verbunden ist und mindestens einen in den Außenring (16) eingesetzten Montagebereich (48, 148) und einen ersten Zentrierbereich (52) umfasst, der in Bezug auf den Außenring (16) axial nach außen ragt, und ein erstes zylindrisches Zentrierlager (44), das radial nach außen gerichtet ist,
**dadurch gekennzeichnet, dass** das Zentrierteil (30) eine massive Bodenwand (74) aufweist, die ein axiales Ende des Hohlraums (66) schließt.

2. Radnabe (32) nach Anspruch 1, **dadurch gekennzeichnet, dass** die Bodenwand (74) scheibenförmig ist.

3. Radnabe (32) nach einem der vorhergehenden Ansprüche, **dadurch gekennzeichnet, dass** das Zentrierteil (30) im Außenring (16) aufgeschrumpft ist, vorzugsweise ohne Löten, Schweißen oder Kleben.

4. Radnabe (32) nach Anspruch 3, **dadurch gekennzeichnet, dass** der Montagebereich (48) ein zylindrisches Schrumpflager (50) aufweist, das radial nach außen gerichtet und im Außenring (16) aufgeschrumpft ist.

5. Radnabe (32) nach einem der vorhergehenden Ansprüche, **dadurch gekennzeichnet, dass** das Zentrierteil (30) eine Außenfläche (58) hat, die radial zur Außenseite des Hohlraums (66) gerichtet ist und das erste Zentrierlager (44) beinhaltet, und eine Innenfläche (62), die radial zur Innenseite des Hohlraums (66) gerichtet ist, wobei das Zentrierteil (30) des Weiteren einen ringförmigen Übergangsbereich (54) umfasst, der sich vom ringförmigen Montagebereich (48) zum ersten Zentrierbereich (52) erstreckt, wobei das Zentrierteil (30) eine zwischen der Außenfläche (58) und der Innenfläche (62) gemessene radiale Dicke aufweist, die sich entlang der Bezugsachse ändert und am ringförmigen Übergangsbereich (54) einen Mindestwert aufweist, wobei der Mindestwert kleiner als die Hälfte der radialen Dicke ist, die am ringförmigen Montagebereich (48) gemessen wird.

6. Radnabe (32) nach Anspruch 5, **dadurch gekennzeichnet, dass** der Mindestwert kleiner als die Hälfte der radialen Dicke ist, die im ersten Zentrierbereich (52) gemessen wird.

7. Radnabe (32) nach Anspruch 5 oder Anspruch 6, **dadurch gekennzeichnet, dass** der ringförmige Übergangsbereich (54) eine parallel zur Bezugsachse gemessene Länge hat, die größer als der Mindestwert und vorzugsweise doppelt so groß wie der Mindestwert ist.

8. Radnabe (32) nach einem der Ansprüche 5 bis 7, **dadurch gekennzeichnet, dass** die Außenseite (60) des ringförmigen Übergangsbereichs (54) eine äußere ringförmige Schrumpfnut bildet.

9. Radnabe (32) nach einem der Ansprüche 5 bis 8, **dadurch gekennzeichnet, dass** das Zentrierteil (30) des Weiteren einen zweiten Zentrierbereich (56) mit einem zweiten, radial nach außen gerichteten Zentrierlager (46) umfasst, wobei der erste Zentrierbereich (52) axial zwischen dem ringförmigen Übergangsbereich (54) und dem zweiten Zentrierbereich (56) liegt.

10. Radnabe (32) nach Anspruch 9, **dadurch gekennzeichnet, dass** das zweite Zentrierlager (46) axial zwischen der Bodenwand (74) und dem ersten Zentrierlager (44) angeordnet ist.

11. Radnabe (32) nach Anspruch 9, **dadurch gekennzeichnet, dass** die Bodenwand (74) axial zwischen dem ersten Zentrierlager (44) und dem zweiten Zentrierlager (46) angeordnet ist.

12. Radnabe (32) nach einem der Ansprüche 1 bis 11, **dadurch gekennzeichnet, dass** die Außenfläche (58) des Teils ein Demontagerelief (72) bildet.

13. Radlager mit mindestens einer Radnabe (32) nach einem der vorhergehenden Ansprüche, einem oder mehreren Innenringen, auf denen eine oder mehrere Rollbahnen ausgebildet sind, Rollkörpern (18, 20) zum Rollen auf der oder den am Außenring (16) und auf der oder den am Innenring (12, 14) gebildeten Laufbahnen.

14. Fahrzeugradanordnung, die ein Radlager (10) nach Anspruch 13 umfasst und eine Bremsscheibe (42), die auf dem ersten Zentrierlager (44) zentriert ist.

15. Fahrzeugradanordnung nach dem vorstehenden Anspruch, **dadurch gekennzeichnet, dass** die Nabe mindestens einem der Ansprüche 9 bis 11 entspricht und die Radanordnung des Weiteren eine auf dem zweiten Zentrierlager (46) zentrierte Radfelge (40) umfasst.

## Claims

1. A wheel hub (32) comprising:
- a one-piece outer ring (16) having at least one outer race turned radially inward and defining a reference axis (32) of the wheel hub and a tubular cavity (66), and a flange (34) provided with holes (36) for fixing a wheel rim (40); and
- a centring piece (30) integral with the outer ring (16) and having at least one mounting zone (48, 148) inserted in the outer ring (16), and a first centring zone (52) projecting axially outwardly with respect to the outer ring (16), and having a first cylindrical centring bearing surface (44) facing radially outwardly,
**characterized in that** the centring piece (30) has a solid bottom wall (74) closing an axial end of the cavity (66) .

2. A wheel hub (32) according to claim 1, **characterized in that** the bottom wall (74) is discoidal.

3. A wheel hub (32) according to any one of the preceding claims, **characterized in that** the centring piece (30) is shrunk into the outer ring (16), preferably without brazing, welding or bonding.

4. A wheel hub (32) according to claim 3, **characterized in that** the mounting zone (48) has a cylindrical shrink-fitting bearing surface (50) facing radially outwardly shrunk inside the outer ring (16),

5. A wheel hub (32) according to any one of the preceding claims, **characterized in that** the centring piece (30) has an outer surface (58) facing radially towards the outside of the cavity (66) and including the first centring bearing surface (44), and an inner surface (62) facing radially towards the inside of the cavity (66), the centring piece (30) further comprising an annular transition zone (54) extending from the annular mounting zone (48) to the first centring zone (52), the centring piece (30) having a radial thickness, measured between the outer surface (58) and the inner surface (62), which varies along the reference axis, passing through a minimum value at the annular transition zone (54), the minimum value being less than half the radial thickness measured at the annular mounting zone (48) .

6. A wheel hub (32) according to claim 5, **characterized in that** the minimum value is less than half the radial thickness measured at the first centring zone (52) .

7. A wheel hub (32) according to claim 5 or claim 6, **characterized in that** the annular transition zone (54) has a length, measured parallel to the reference axis, greater than the minimum value, and preferably greater than twice the minimum value.

8. A wheel hub (32) according to any one of claims 5 to 7, **characterized in that** the outer face (60) of the annular transition zone (54) forms an outer annular shrinking groove.

9. A wheel hub (32) according to any one of claims 5 to 8, **characterized in that** the centring piece (30) further comprises a second centring zone (56) having a second centring bearing surface (46) facing radially outwards, the first centring zone (52) being located axially between the annular transition zone (54) and the second centring zone (56) .

10. A wheel hub (32) according to claim 9, **characterized in that** the second centring bearing surface (46) is located axially between the bottom wall (74) and the first centring bearing surface (44).

11. A wheel hub (32) according to claim 9, **characterized in that** the bottom wall (74) is located axially between the first centring bearing surface (44) and the second centring bearing surface (46).

12. A wheel hub (32) according to any one of claims 1 to 11, **characterized in that** the outer surface (58) of the piece forms a dismounting relief (72).

13. A wheel bearing comprising at least one wheel hub (32) according to any one of the preceding claims, one or more inner ring(s) on which one or more race(s) is/are formed, rolling bodies (18, 20) for rolling on the race(s) formed on the outer ring (16) and on the race(s) formed on the inner ring(s) (12, 14).

14. A vehicle wheel assembly, comprising a wheel bearing (10) according to claim 13, and a brake disc (42) centred on the first centring bearing surface (44).

15. A vehicle wheel assembly according to the preceding claim, **characterized in that** the hub is at least according to any one of claims 9 to 11, and **in that** the wheel assembly further comprises a wheel rim (40) centred on the second centring bearing surface (46).
